# EUROPEAN PATENT APPLICATION

(11) **EP 2 654 142 A1**
(43) Date of publication of application: **23.10.2013**
(21) Application number: 12290138.2
(22) Date of filing: 19.04.2012
(51) Int. Cl.: H01S 3/00, H01S 3/23, H01S 3/13

(54) **Fully analog method for stabilizing CEP of ultra-short high-power pulses in a chirped pulse amplification laser system**

(71) Applicant: Amplitude Technologies, 91090 Lisses (FR); COMMISSARIAT A L'ENERGIE ATOMIQUE ET AUX ENERGIES ALTERNATIVES, 75015 Paris (FR); Politecnico Di Milano, 20133 Milano (IT)
(72) Inventor: Paul, Pierre Mary, 91210 Draveil (FR); Gobert, Olivier, 28230 Gallardon (FR); Comte, Michel, 92160 Antony (FR); Hergott, Jean-François, 94240 L'Hay-Les-Roses (FR); Sansone, Giuseppe, 20133 Milano (IT); Calegari, Francesca, 20133 Milano (IT)
(74) Representative: Coralis Harle

(57) **Abstract**

The present invention concerns a chirped pulse amplification system comprising an oscillator (1) generating ultrashort seed pulses (10) ; a stretcher (3) generating temporally stretched pulses (20) ; an optical amplification system (4) generating stretched amplified pulses (30) ; a compressor (5) suitable for generating high energy ultrashort pulses (40) and a CEP feedback loop comprising measurement means suitable for measuring pulse to pulse carrier-envelope phase drift of the high energy ultrashort pulses (40) and carrier-envelope phase drift correction means. According to the invention, the CEP feedback loop comprises an analog CEP drift detection system placed at the output of said chirped pulse amplification system and analog CEP drift correction means comprising a CEP modulator placed in the beam path of said chirped pulse amplification system.

## Description

The present invention relates to lasers for generating ultra short pulses in the femtosecond regime. More precisely, the invention concerns characterization and control of the relative position of the carrier and the envelope of the electric field, or carrier-envelope phase (CEP). The invention concerns a new method and device for stabilizing the carrier-envelope phase of an ultra-short pulse laser.

Research in the field of ultra fast lasers has been intensive for the last thirty years. The duration of current laser pulses is in the femtosecond range. In particular, the advent of the Chirped Pulse Amplification (CPA) technique has led to the production of high energy ultra short pulses and thus to very high peak intensities.

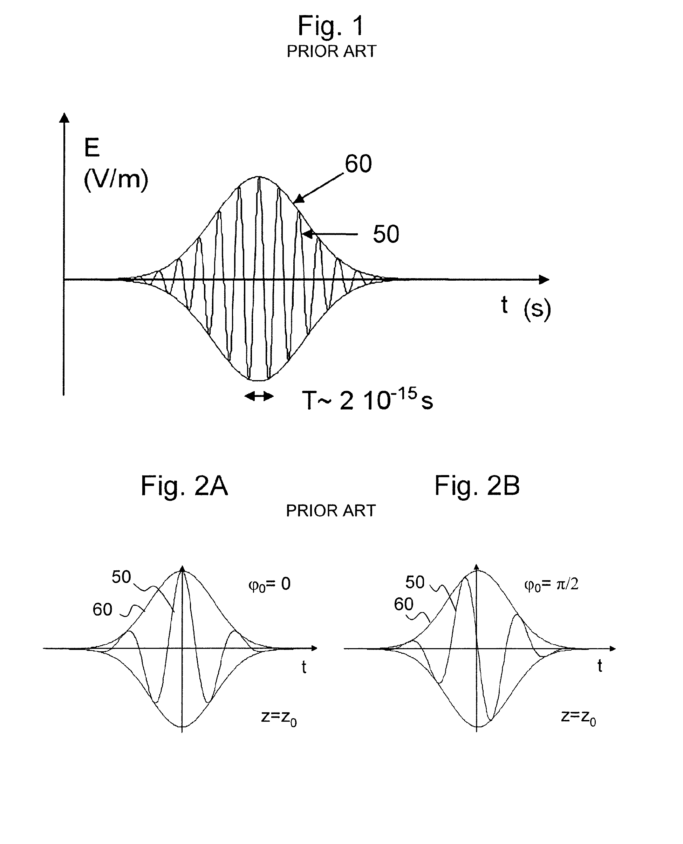

Figure 1 represents schematically the electric field 50 for a pulse having a duration T of a few tens of femtoseconds (fs). We consider for example an electromagnetic wave in the infrared range having a periodof about 2 fs. When the laser pulse duration is of the order of a few femtoseconds, the envelope 60 of the electromagnetic wave describing the laser pulse contains only few optical cycles (see fig. 1).

For the same envelope 60, the electric field can be different from one pulse to another (see fig. 2A and 2B). In dispersive media, the propagation speed of the carrier wave ω₀ (phase velocity v_{ϕ}(ω₀)) is different from the one of the envelope (group velocity v_{g}). The carrier-envelope phase ϕ₀ is the phase difference between the carrier and the envelope. Variations of the CEP cause temporal drift of the electric field, or CEP drift, that can be observed when comparing figure 2A and figure 2B. On figure 2A, ϕ₀ is equal to zero. Due to CEP drift, on figure 2B, ϕ₀ is equal to π/2. We observe that the highest instantaneous electric field intensity of a few-cycle pulse depends on the carrier envelope phase. While the electric field is the relevant physical term, the use of the envelope is usually enough to describe most physical phenomena. This is not necessarily the case for ultra short and intense laser pulses (see T.Brabec and F.Krausz "Intense few-cycle laser fields : Frontiers in nonlinear optics" Reviews of Modern Physics, vol.72, n°2, april 2000, and M.Nisoli "Effects of Carrier-Envelope Phase Differences of Few-Optical-Cycle Light Pulses in Single-Shot High-Order-Harmonic Spectra " Phys. Rev. Letters, Vol. 91, n° 21, 2003). Therefore, the control of the electric field of ultra short laser pulses, more precisely the stabilization of the CEP drift, is of a major importance for studying ultra fast dynamics in physics, chemistry or biology (A. Baltuska et al. "Attosecond control of electronic processes by intense light fields" Nature 421 - 2003).

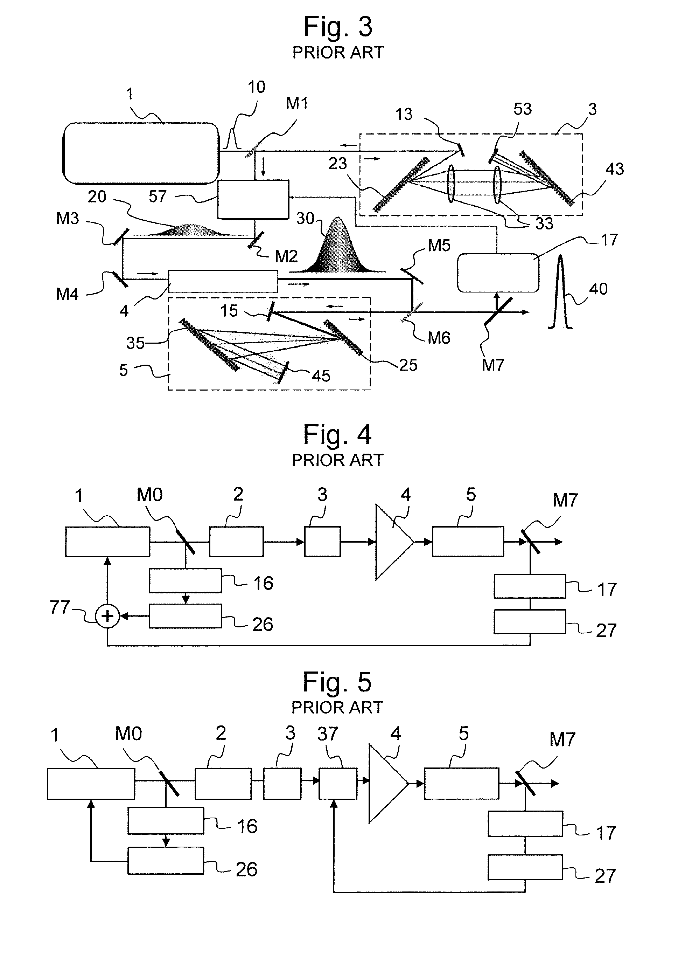

In the present document, we consider laser pulses generated via the Chirped Pulse Amplification or CPA technique, wherein the laser beam goes through a large number of dispersive media (crystals, lenses...) that cause the CEP to drift. Figure 3 represent schematically a Chirped Pulse Amplification system according to prior art and is described in the following section. A chirped pulse amplification laser system generally comprises an ultra short laser source (oscillator) 1, a pulse stretching system or stretcher 3, an optical amplifier 4 or a series of optical amplifiers and a pulse compressor 5. The oscillator 1 is CEP stabilized using a feedback system for example based on a detection system for measuring the CEP of seed pulses and by modulating the oscillator pump laser power accordingly (fast loop correction). The stretcher 3 generally comprises a highly dispersive optical system, for instance an Öffner stretcher, for temporally stretching the pulses prior to amplification. In the example of Figure 3, the stretcher 3 comprises a folding mirror 13, a first diffraction grating 23, an optical system 33 made of lenses, a second diffraction grating 43 and a reflecting mirror 53. The optical amplifier(s) 4 comprises a laser medium 4, for instance a solid state crystal of Titanium: Sapphire. The compressor 5 generally comprises a highly dispersive optical system that compensates for the dispersion introduced by the stretcher 3 and the amplifier(s) 4. In the example of Figure 3, the compressor 5 comprises a folding mirror 15, a first diffraction grating 25, a second diffraction grating 35, and a reflecting mirror 45. Advantageously, the CPA optical system of figure 3 also includes optical components such as mirrors M2, M3, M4, M5, M6 and/or beam-splitters M1, M7 for directing the pulses toward the CPA components and for folding the optical beam path. The mode-locked oscillator 1 generates energetic (few nanoJoule) ultra short (few femtosecond) laser pulses trains 10 at a repetition rate of several tens of MHz. The seed pulses 10 are then stretched by the stretcher 3 to several hundreds of picoseconds thus forming temporally stretched pulses 20. The stretched pulses 20 are then amplified by the amplifier(s) 4 at repetition rates of the order of few kHz thus forming amplified stretched pulses 30. The amplified stretched pulses 30 are recompressed by a compressor 5 to recover the initial pulse duration thus forming amplified recompressed pulses 40 which are high power ultrashort laser pulses.

The CPA system of figure 3 also comprises means for stabilizing the CEP drift comprising means for measuring 17 the CEP drift of a series of output amplified recompressed pulses 40 and means for modifying 57 the CEP drift. The means for measuring 17 the CEP drift of output pulses may comprise an f-2f interferometer and a CCD detection system. The means for modifying 57 the CEP drift may comprise a CEP modulator. The means for measuring the CEP drift 17 and the means for modifying the CEP 57 form a feedback loop on the CPA beam path.

There are several known methods for stabilizing the Carrier-Envelope Phase of a CPA laser. The stabilization of the amplified laser pulses is usually accomplished by means of two feedback loops operating on different parts of a CPA system. The first feedback loop stabilizes the CEP drift of the pulse train 10 delivered by the oscillator 1. The second feedback loop is used to stabilize the CPA system itself.

To obtain CEP stable amplified laser pulses, a prerequisite is stabilizing the laser source thus to lock the oscillator CEP. There are different methods for locking the oscillator CEP. They consist in a feedback loop where the characterization of the CEP is made by f-2f or f-0f interferometry (see M.Kakehata ,Y. Fujihira, H. Takada, Y. Kobayashi, K. Torizuka, T.Homma, H. Takahashi "Measurements of carrier-envelope phase changes of 100-Hz amplified laser pulses" Appl.Phys.B 74 Suppl., S43-S50, 2002, or respectively Fuji et al. "Monolithic carrier-envelope phase-stabilization scheme," Opt. Lett. 30(3), 332-334, 2005). The feedback loop is usually made by modulating the oscillator pump laser power (Holzwarth et al. "Optical Frequency Synthesizer for Precision Spectroscopy" Physical Review Letters 85, 2264,2000) or acting on some elements of the oscillator such as an end mirror (Jones et al. "Carrier Envelope Phase Control of Femtosecond Mode-Locked Lasers and Direct Optical Frequency Synthesis" Science 288,635,2000). The first feedback loop for stabilizing the oscillator is generally called the fast loop. It is important to note that this feedback loop (Phase Locked Loop or PLL) is in general completely analog.

Once the oscillator is CEP stabilized (fast loop), the CPA amplification system composed by the stretcher, amplifiers and compressor does not preserve the CEP due to external turbulences disturbances (thermal drift, vibrations...). It is then necessary to perform another feedback loop to compensate for slow variations of the CEP. The feedback loop for stabilizing the CPA system is generally called the slow loop. In most cases the CEP characterization is done using an f-2f interferometer coupled to a detection device. It is important to note here that in the state of the art, the detection device consists in a spectrometer followed by a digital camera or an array of photodiodes that digitizes the f-2f signal. The numerical signal is then treated via classical processing treatments used in spectral interferometry techniques (M. Takeda, H. Ina, S. Kobayashi "Fourier-transform method of fringe-pattern analysis for computer-based topography and interferometry" J. Opt. Soc. Am. 72(1), 156-160, 1982).

There are two possible schemes of CEP stabilization for a CPA laser system as represented on figure 4 and figure 5 respectively. More precisely, figures 4 and 5 represent schematically a CPA system comprising an oscillator 1 for generating seed pulses, an optical gate 2 for controlling the repetition rate of pulses, a stretcher 3, an optical amplification system 4 made of an amplifier or a series of amplifiers, and a compressor 5.

Figure 4 represents an exemplary setup with a fast loop comprising a CEP measurement system at the ouput of the oscillator 1. The fast loop comprises a beam-splitter M0 at the output of the oscillator 1, an f-2f interferometer 16 for measuring the CEP drift of initial pulses and a Phase Locked Loop (PLL) 26 system delivering a signal representative of fast CEP drift at the output of the oscillator 1. The slow loop comprises a beam-splitter M7 at the output of the CPA system, an f-2f interferometer 17 for measuring the CEP drift and a PID 27 system delivering a signal representative of slow CEP drift at the output of the CPA system. A system 77 adds the signals from the fast loop and from the slow loop and applies a modulation to the oscillator pump power. The CEP correction is made by superimposing a modulation to the oscillator pump power. Briefly, in the first scheme of figure 4, the fast loop (oscillator stabilization) and the slow loop (amplifier stabilization) are coupled, the fast and slow loops being applied both to the oscillator pump power.

In contrast, in the second scheme of figure 5, the fast and slow loops are decoupled, the fast loop being applied to the oscillator 1 and the slow loop being applied to the chirped pulse amplification part. On figure 5, the fast loop comprises a beam-splitter M0 at the output of the oscillator 1, an f-2f interferometer 16 for measuring the CEP drift of initial pulses and a Phase Locked Loop (PLL) 26 system delivering a signal representative of fast CEP drift at the output of the oscillator 1. The fast loop applies a modulation directly to the oscillator pump power. The fast loop thus locks the CEP at the output of the oscillator 1. The slow loop comprises a beam-splitter M7 at the output of the CPA system, an f-2f interferometer 17 for measuring the CEP drift, a PID 27 system delivering a signal representative of slow CEP drift at the output of the CPA system, and a CEP modulator 37 placed on the optical beam path between the stretcher 3 and the amplifier 4. The PID system is based on a classical Proportional, Integral, Derivative (PID) method (see N.S.Nise "Control Systems Engineering" J.Wiley 2010). The fast loop applies a modulation to the CEP modulator 37. It should be noted that different types of CEP modulators 37 can be used.

Different techniques can be used for correcting the CEP for instance :
- modulation of the oscillator pump power (Holzwarth et al. "Optical Frequency Synthesizer for Precision Spectroscopy" Physical Review Letters 85, 2264,2000) or acting on some elements of the oscillator such as an end mirror (Jones et al "Carrier Envelope Phase Control of Femtosecond Mode-Locked Lasers and Direct Optical Frequency Synthesis" Science 288,635,2000);
- insertion of optical wedges in the beam path (C. Grebing, M. Görbe, K. Osvay, and G. Steinmeyer , "Isochronic and isodispersive carrier-envelope phase-shift compensators", Applied Physics B 97, p. 575-581, 2009) ;
- movement of a diffraction grating or mirror inside the stretcher or compressor (Z. Chang "Carrier-envelope phase shift caused by grating-based stretchers and compressors" Applied Optics, vol.45, n°32, 2006) ;
- introduction of an SLM pulse shaper in the Fourier plane (M.Kakehata et al « Use of a 4f pulse shaper as an active carrier-envelope phase shifter » Conference paper, CLEO 2004, CTuP, CTuP31) ;
- phase modulation using an acousto-optic modulator in various interaction geometries (see S.Koke, C.Grebing, H.Frei, A.Anderson, A.Assion and G.Steinmeyer "Direct frequency comb synthesis with arbitrary offset and shot-noise-limited phase noise" Nature Photonics 9/5/2010 ; L. Canova, X. Chen, A. Trisorio, A. Jullien, A. Assion, G. Tempea, N. Forget, T. Oksenhendler, and R. Lopez-Martens, "Carrier-envelope phase stabilization and control using a transmission grating compressor and an AOPDF," Opt. Lett. 34(9), 1333-1335, 2009 or P.Tournois "Acousto-optic programmable dispersive filter for adaptive compensation of group delay time dispersion in laser systems" Optics communications 140 245-249 (1997).

Opto-mechanical systems such as wedges moving in the beam path or grating/mirror moving inside the stretcher or compressor are limited in bandwidth to few Hertz.

The purpose of the invention is to propose an alternative method for stabilizing Carrier-Envelope Phase of ultrashort and high energy laser pulses generated by a CPA laser in the femtosecond regime.

The present invention thus provides a chirped pulse amplification laser system comprising: an oscillator for generating low power optical pulses at an oscillator output; a pulse stretcher suitable for receiving said optical pulses and for generating temporally stretched pulses ; an optical amplification system suitable for receiving said temporally stretched pulses and for generating amplified stretched pulses ; a pulse compressor suitable for receiving said amplified stretched pulses and for generating amplified recompressed pulses at a compressor output ; said optical pulses, temporally stretched pulses, amplified stretched pulses and amplified recompressed pulses propagating along an optical beam path extending from the oscillator output to the compressor output through said chirped pulse amplification laser system ; and a device for stabilizing the carrier-envelope phase of said amplified recompressed pulses placed on said optical beam path, said device comprising a feedback control loop for stabilizing pulse to pulse carrier-envelope phase variations of the amplified recompressed pulses.

According to the invention, said device comprises :
- an analog electronic detection system for measuring pulse to pulse carrier-envelope phase variations of said amplified recompressed pulses and for generating an analog error signal representative of said pulse to pulse carrier-envelope phase variations ;
- an analog electro-optic modulator inserted on the optical beam path of the chirped pulse amplification laser system, said analog electro-optic modulator being configured to receive said analog error signal and to induce an electro-optic carrier-envelope phase correction as a function of said analog error signal.

In a preferred embodiment of the invention, said analog detection system comprises :
- an f-2f interferometer suitable for forming an f-2f optical signal of said amplified and recompressed pulses ;
- a fast analog detection system suitable for detecting f-2f optical signal and for forming an analog signal representative of said pulse to pulse carrier-envelope phase variations.

According to different aspects of the invention, the chirped pulse amplification laser system, comprises moreover:
- a dispersive optical component suitable for spatially dispersing said f-2f optical signal ;
- a spatial filter suitable for filtering a part of said spatially dispersed f-2f optical signal, and
- a beam splitter for separating the optical signal at the output of said spatial filter in a first optical beam and a second optical beam.

In a preferred embodiment said analog detection system comprises a first analog detector configured for detecting said first optical beam and a second analog detector configured for detecting said second optical beam.

According to particular aspects of the invention :
- said first analog detector and said second analog detector are selected among : photo-multiplier tubes and photodiodes ;
- said analog detection system comprises analog signal processing means suitable for receiving analog signals from said first and second detectors for generating an analog error signal using the proportional-integrated-derivative method;
- the dispersive optical component is chosen among a diffraction grating, a prism and an amplitude modulation filter;
- the analog electro-optic modulator is chosen among an acousto-optic programmable dispersive filter and an electro-optic modulator.

The invention also concerns a method for stabilizing the carrier-envelope phase of ultra-short high power laser pulses in a chirped pulse amplification laser system, said method comprising the steps of :
- generating low power optical pulses ;
- temporally stretching said optical pulses into temporally stretched pulses ;
- optically amplifying the temporally stretched pulses into amplified stretched pulses ;
- temporally compressing the amplified stretched pulses into amplified recompressed pulses; and
- stabilizing pulse to pulse carrier-envelope phase variations using a slow feedback loop acting on said chirped pulse amplification system.

According to the method of the invention, said step of stabilizing pulse to pulse carrier-envelope phase variations comprises the following steps :
- measuring analogically a signal representative of pulse to pulse carrier-envelope phase variations of said amplified recompressed pulses ;
- generating an analog error signal representative of said pulse to pulse carrier-envelope phase variations ;
- feedbacking said analog error signal to an analog electro-optic modulator inserted on the optical beam path of the chirped pulse amplification laser system, so that said analog electro-optic modulator applies an electro-optic modulation as a function of said analog error signal.

The invention applies in particular to chirped pulse amplification systems for generating high power ultrashort pulses.

The present invention concerns also the features disclosed in the following description and which are to be considered isolately or according to any feasible technical combination.

This description is given for non limiting illustrative purpose only and will better be understood when refering to the annexed drawings wherein :
- figure 1 represents schematically the variation of the electric field 50 versus time for a pulse having a duration T of a few tens of femtoseconds ;
- figure 2A represents the variation of the electric field versus time for an ultrashort pulse having a CEP equal to zero ; figure 2B represents the variation of the electric field versus time for an ultrashort pulse having a CEP equal to π/2.
- figure 3 represent schematically a Chirped Pulse Amplification system with a feedback loop for stabilizing CEP according to prior art ;
- figure 4 represents a prior art a CPA laser system with CEP stabilization wherein the fast loop and the slow loop are coupled ;
- figure 5 represents a prior art a CPA laser system with CEP stabilization wherein the fast loop and the slow loop are decoupled ;
- figure 6 represents a CPA laser system with CEP stabilization according to an embodiment of the invention ;
- figure 7 represents schematically a device for CEP drift analog detection;
- figure 8 represents schematically a setup for spectral interferometry ;
- figure 9 represents experimental CEP measurements using a linear electro-optic effect ;
- figure 10 represents CEP measurements of a CPA system when the analog CEP drift correction is off ;
- figure 11 represents CEP measurements of the same CPA system of Fig 10, when the analog CEP drift correction is on.

Recently, a new totally analog method for CEP characterization has been proposed (S.Koke, C.Grebing, B.Manschwetus and G.Steinmeyer "Fast f-to-2f interferometer for a direct measurement of the carrier-envelope phase drift of ultrashort amplified laser pulses" Optics Letters, vol.33, n°21, Nov 2008, p.2545-2547). This method is based upon the fact that, if we can neglect delay variations, the CEP drift is directly linked to the spatial position of f-2f fringes. In the Fourier plane of a spectrometer there is a unique correspondence between a frequency and its position. Splitting a fringe into two parts that are respectively sent into two rapid detectors allow to monitor the spatial position (the difference of the integrated signals of the two detectors) of a given frequency, thus the CEP.

The analog detection method opens the possibility to provide a new fully analog method for correcting the slow variations of the CEP induced by CPA amplifiers.

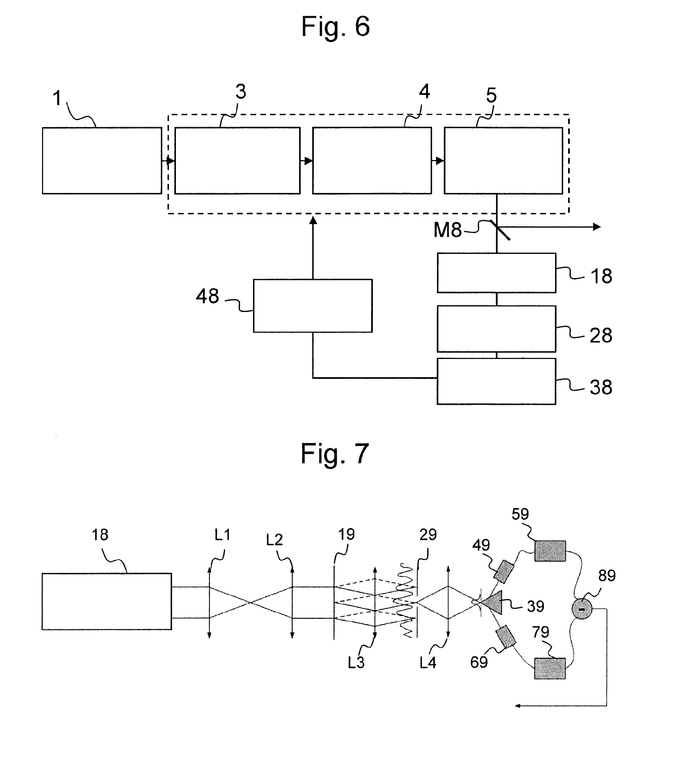

Figure 6 represents schematically an embodiment of the invention applies for stabilizing CEP slow variations of laser pulses in a chirped pulse amplification system.

On figure 6, the CEP slow loop system comprises :
- a beam-splitter M8 at the output of the CPA system ;
- an f-2f interferometer 18 ;
- a fast analog detection 28 based on photomultipliers tubes (PMT);
- an analog error signal generator 38 based on the Proportional, Integral, Derivative (PID) method ; and
- a fast analog CEP Modulator 48.

The CEP modulator 48 can be either anAOPDF or a linear Electro-optic modulator in a transverse configuration, wherein an electric field is applied in the same direction parallel to the direction of polarization of the optical beam (see O. Gobert, P.M Paul, J.F Hergott, O. Tcherbakoff, F. Lepetit, P. D Oliveira, F. Viala and M. Comte "Carrier-envelope phase control using linear electro-optic effect" Optics Express vol.19, n°6, March 2011, p.5410-5418). The analog error signal from the PID feeback loop is send to the CEP modulator 48.

Figure 7 represents schematically an analog CEP detection system according to a preferred embodiment. The analog CEP detection system comprises :
- an f-2f interferometer 18 ;
- an optical imaging system made of lenses L1, L2, L3, L4 ;
- a dispersive element 19 (diffraction grating, prism, etc.) allowing spatial dispersion of the frequencies contained into the f-2f signal ;
- a spatial filter element, such as a slit 29, allowing the selection of a portion of the interference pattern containing one or more interference fringes ;
- a splitting element 39 that sends two separate parts of the fringes into two different analog detectors 49, 69 respectively ;
- two fast analog detectors 49, 69 that can be either photomultiplier tubes or photodiodes.

The fully analog CEP feedback loop configuration replaces an Analog to Digital Converter (ADC) at the ouput of a classical detection system, a numerical processing system, and a Digital to Analog Converter (ADC) for controlling a CEP modulator. The fully analog CEP feedback slow loop guarantees a broad bandwidth of correction up to few hundreds of kHz.

The next section describes the method according to an embodiment of the invention.

The method is based on three main process steps :
1) Fast detection of the CEP drift (up to the MHz range) using fast analog detectors (i.e. high bandwidth detectors) ;
2) fast analysis and elaboration of the signal related to the CEP drift by means of all analog components ;
3) fast correction of the CEP drift using an analog CEP modulator.

We propose a new method for stabilizing the carrier envelope phase of CPA laser. This method is fully analog and allows high speed of detection. Therefore a broad bandwidth of correction is accessible.

### 1 - Analog Measurement of the CEP

An optical system made of lenses L1, L2 collects the interference beam at the output of the f-2f interferometer device 18 and directs said beam onto a diffraction grating 19. The frequencies contained in the f-2f signal are spatially dispersed by the diffraction grating 19 (see figure 7). A lens L3 forms an image of the fringes pattern on a slit 29. The slit 29 selects only a portion of the spectrum composed by one or more fringes only. Another lens L4 forms an image of the slit 29 onto a splitting element 39 that splits the signal into two equal parts, each part being directed toward a separate photomultiplier tube 49, 69 respectively. The splitting element 39 can be either a prism, or an amplitude mask (having a transmission spatially distributed of either 0 or 1) with the same periodicity than the modulated f-2f spectrum. This latter method allows in principle higher signal level and better signal to noise ratio. The two signals obtained by the two photomultiplier tubes (PMTs) 49, 69 respectively are gated and integrated each in a specific boxcar integrator 59, and 79 respectively. A two-input analog substracter 89 derives the difference between the two signals from the two analog integrators 59, 79. This difference obtained at the output of the substracter 89 represents pulse to pulse variations of the CEP. This difference represents the error signal which is transmitted at the input of the PID system.

### 2 - Fast CEP modulator

The device used to stabilize the CEP modulator is driven analogically. The analog CEP modulator is able to run at several tens of kHz. As a fast analog CEP modulator, one can use either an Acousto Optic Programmable Dispersive Filter (AOPDF) for instance from Dazzler or an Electro-Optic CEP module. The CEP modulator can be placed anywhere into the optical beam path of CPA laser except in the oscillator. More precisely, the CEP modulator can be inserted in the optical beam path of the CPA provided that the beam fluence and illuminance do not damage the modulator or the laser beam quality. Therefore, the slow and fast loops are decoupled which guarantees long term stability of the compensation loop.

### 3 - Feedback loop

The Feedback loop integrates an analog PID device that sends an analog error signal the CEP modulator. Potentially this type of feedback loop can be extremely fast and efficient.

### • Experimental Demonstration

The Experimental demonstration has been performed using an Electro-Optic CEP modulator.

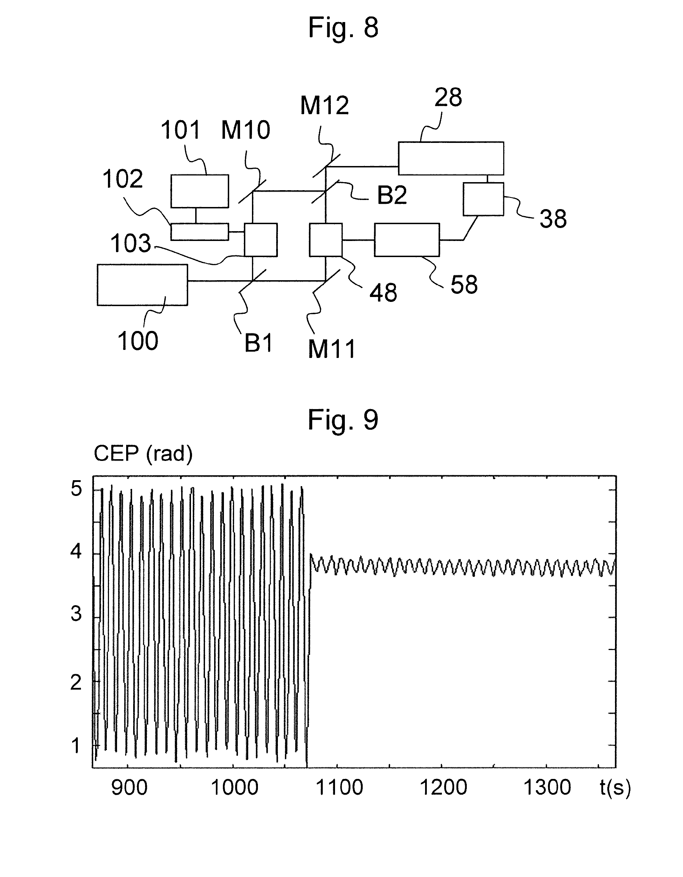

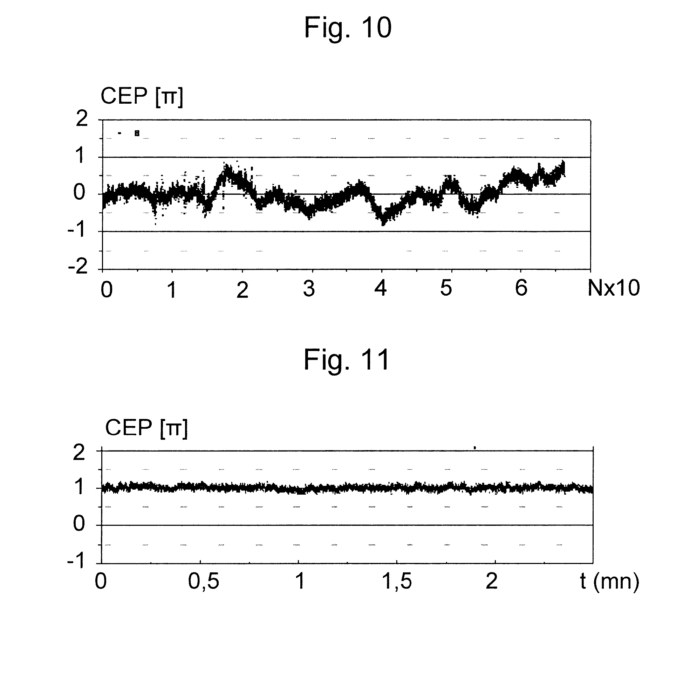

Two types of measurements have been performed. One of the measurements performed is done by spectral interferometry using a Mach-Zehnder interferometer (see Figure 8 experimental set-up and figure 9 measurement). The other one is performed directly on a CPA laser where the CEP modulator is placed after the stretcher (see Figures 10 and 11).

Figure 8 represents schematically an experimental setup of spectral interferometry used to test the analog feedback loop for stabilizing CEP. The setup comprises a broadband laser source 100 for generating a beam of low power laser pulses (less than a few µJ per pulse). A first beam splitter B1 addresses a part of the laser pulse beam to a first CEP Modulator 103 and another part of the laser pulse beam to a second CEP Modulator 48 of an analog feedback loop. A function generator 101 generates for example a sinusoidal signal. The signal generator 101 drives a high voltage power supply 102 and induces a sinusoidal modulation of the high voltage. The power supply applies a modulated high voltage to a first Pockels Cell CEP Modulator 103. In turn, the CEP Modulator 103 induces a sinusoidal perturbation on the CEP of the laser pulses. A Mach-Zehnder interferometer is delimited by beam splitters B1, B2 and mirror M11. The experimental setup also comprises a slow feedback loop including an analog CEP drift detection system 28, an analog PID device 38, and high voltage supply 58 and an analog-driven CEP modulator 48. The analog detection system associated with the analog PID device 38 generates an analog CEP correction signal used to modify the high voltage applied to the CEP modulator 48. The second CEP modulator 48 thus applies a feedback modulation on the laser pulse beam. The beam splitter B2 combines the beam of laser pulses modulated by the first CEP modulator 103 and the beam of laser pulses modulated by the second CEP modulator 48 into the feedback loop. Mirrors M10, M11 and M12 are used for folding the beam paths. Figure 9 displays the measurements of CEP drift as a function of time using the experimental setup of figure 8. The first part of the graph of fig. 9 (for t comprised between ∼875 s and 1075 s.) shows a sinusoidal perturbation having an amplitude of 4 radians which is induced by the first Pockels Cell CEP Modulator 103. On the second part of the graph (for t comprised between ∼1075 s. and ∼1360 s.), i.e. when the feedback loop is activated on the slow feedback loop (CEP modulator 48, analog detection 28, analog PID device 38, high voltage modulation 58 applied to CEP modulator 48), while keeping the sinusoidal modulation of the same amplitude on first Pockels Cell CEP Modulator 103, we observe a drastic reduction of the CEP oscillation due to compensation by the second Pockels Cell CEP Modulator 48. THE CEP drift is stabilized at a given level. This correction loop has been tested up to several hundreds of Hertz, and appears to be mainly limited by the high voltage supply 58.

The result of the direct CPA feedback control is shown on figures 10 and 11 using a CPA laser generating high power ultrashort laser pulses as detailed in reference with figures 6 and 7, wherein the CEP modulator 48 is placed after the stretcher 3. Figure 10 represents a graph of CEP experimental measurement at the output of a CPA laser when the analog correction is turned off. Figure 11 represents a graph of experimental measurements of CEP phase as a function of time at the output of a CPA laser using an analog linear electro-optic modulator when the analog correction is turned on. Comparing figures 10 and 11 shows a reduction in CEP drift standard deviation (SD) from 0.2 rad on figure 10, without CEP analog correction, down to 0.06 rad with the analog correction. The CPA laser delivers between 3 and 17 W at 1 kHz repetition rate (see Figs 10-11), for pulse duration of about 40 fs. This demonstrates at low and high power the capability of the method to proceed to fast correction of the CEP with analog devices. Similar results can be obtained using a Dazzler type CEP modulator or an Acousto-Optic Programmable Dispersive Filter (AOPDF).

Compared to prior art, the method and device of the invention for stabilization of the carrier-envelope phase is completely analog (without any digitalization of the signals). The fully analog slow feedback loop has the advantage to guarantee a broad bandwidth of correction up to few hundreds of kHz. This configuration has never been proposed so far, and compared to prior art, it has the advantages of a larger bandwidth due to the accessible speed of correction.

## Claims

1. A chirped pulse amplification laser system comprising a:
- an oscillator (1) for generating low power optical pulses (10) at an oscillator output ;
- a pulse stretcher (3) suitable for receiving said optical pulses (10) and for generating temporally stretched pulses (20) ;
- an optical amplification system (4) suitable for receiving said temporally stretched pulses and for generating amplified stretched pulses (30) ;
- a pulse compressor (5) suitable for receiving said amplified stretched pulses (30) and for generating amplified recompressed pulses (40) at a compressor output ;
- said optical pulses (10), temporally stretched pulses (20), amplified stretched pulses (30) and amplified recompressed pulses (40) propagating along an optical beam path extending from the oscillator output to the compressor output through said chirped pulse amplification laser system ; and
- a device for stabilizing the carrier-envelope phase of said amplified recompressed pulses (40) placed on said optical beam path, said device comprising a feedback control loop for stabilizing pulse to pulse carrier-envelope phase variations of the amplified recompressed pulses (40),
**characterized in that** said device comprises :
- an analog electronic detection system (28, 38) for measuring pulse to pulse carrier-envelope phase variations of said amplified recompressed pulses (40) and for generating an analog error signal representative of said pulse to pulse carrier-envelope phase variations, and
- an analog electro-optic modulator (48, 58) inserted on the optical beam path of the chirped pulse amplification laser system, said analog electro-optic modulator (48) being configured to receive said analog error signal and to induce an electro-optic carrier-envelope phase correction as a function of said analog error signal.

2. A chirped pulse amplification laser system according to claim 1, wherein said analog detection system comprises :
- an f-2f interferometer (18) suitable for forming an f-2f optical signal of said amplified and recompressed pulses (40) ;
- a fast analog detection system (49, 59, 69, 79, 89) suitable for detecting f-2f optical signal and for forming an analog signal representative of said pulse to pulse carrier-envelope phase variations.

3. A chirped pulse amplification laser system according to claim 2, comprising moreover :
- a dispersive optical component (19) suitable for spatially dispersing said f-2f optical signal ; and
- a spatial filter (29) suitable for filtering a part of said spatially dispersed f-2f optical signal, and
- a beam splitter (39) suitable for separating the optical signal at the output of said spatial filter in a first optical beam and a second optical beam.

4. A chirped pulse amplification laser system according to claim 3, wherein said analog detection system comprises a first analog detector (49) configured for detecting said first optical beam and a second analog detector (69) configured for detecting said second optical beam.

5. A chirped pulse amplification laser system according to claim 4, wherein said first analog detector (49) and said second analog detector (69) are selected among : photo-multiplier tubes and photodiodes.

6. A chirped pulse amplification laser system according to claim 1, wherein said analog detection system comprises analog signal processing means (59, 69, 79) suitable for receiving analog signals from said first and second detectors for generating an analog error signal using the proportional-integrated-derivative method.

7. A chirped pulse amplification laser system according to claim 1, wherein the dispersive optical component (19) is chosen among a diffraction grating, a prism and an amplitude modulation filter.

8. A chirped pulse amplification laser system according to claim 1, wherein the analog electro-optic modulator (48) is chosen among an acousto-optic programmable dispersive filter and an electro-optic modulator.

9. A method for stabilizing the carrier-envelope phase of ultra-short high power laser pulses in a chirped pulse amplification laser system, comprising the steps of :
- generating low power optical pulses (10) ;
- temporally stretching said optical pulses (10) into temporally stretched pulses (20) ;
- optically amplifying the temporally stretched pulses (20) into amplified stretched pulses (30);
- temporally compressing the amplified stretched pulses (30) into amplified recompressed pulses (40) ;
- stabilizing pulse to pulse carrier-envelope phase variations using a feedback loop acting on said chirped pulse amplification system,
**characterized in that** :
said step of stabilizing pulse to pulse carrier-envelope phase variations comprises the following steps :
- measuring analogically a signal representative of pulse to pulse carrier-envelope phase variations of said amplified recompressed pulses (40) ;
- generating an analog error signal representative of said pulse to pulse carrier-envelope phase variations ;
- feedbacking said analog error signal to an analog electro-optic modulator (48, 58) inserted on the optical beam path of the chirped pulse amplification laser system, so that said analog electro-optic modulator applies an electro-optic modulation as a function of said analog error signal.
